# EUROPÄISCHE PATENTSCHRIFT

(11) **EP 3 343 185 B1**
(45) Veröffentlichungstag und Bekanntmachung des Hinweises auf die Patenterteilung: **26.08.2020**
(21) Anmeldenummer: 17206673.0
(22) Anmeldetag: 12.12.2017
(51) Int. Cl.: G01F 1/66

(54) **ULTRASCHALLDURCHFLUSSMESSGERÄT UND VERFAHREN ZUR MESSUNG DES DURCHFLUSSES**
ULTRASOUND FLOW MEASURING DEVICE AND METHOD FOR MEASURING THE FLOW
DÉBITMÈTRE À ULTRASONS ET PROCÉDÉ DE MESURE DU DÉBIT

(30) Priorität: 27.12.2016 DE 102016125745
(43) Veröffentlichungstag der Anmeldung: 04.07.2018
(73) Patentinhaber: Krohne AG, 4019 Basel (CH)
(72) Erfinder: van Klooster, Jeroen Martin, 4005 GN Tiel (NL); Huijzer, Arie, 3363 BS Sliedrecht (NL)
(74) Vertreter: Gesthuysen Patent- und Rechtsanwälte

(56) Entgegenhaltungen:
- EP-A1- 1 736 741
- EP-A1- 2 278 280
- US-A1- 2012 285 260
- US-B1- 9 453 749

## Beschreibung

Die Erfindung geht aus von einem Ultraschalldurchflussmessgerät zur Messung des Durchflusses eines durch ein Messrohr strömenden Mediums, mit wenigstens zwei Ultraschallwandlern und wenigstens einer Steuer- und Auswerteeinheit, wobei das Messrohr eine Innenwand aufweist, wobei die Ultraschallwandler jeweils als Sender zur Aussendung eines Ultraschallsignals und/oder als Empfänger für den Empfang des Ultraschallsignals ausgestaltet sind, wobei die Ultraschallwandler in Strömungsrichtung gesehen versetzt derart an dem Messrohr angeordnet sind, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion an der Innenwand des Messrohrs empfängt, wobei das Ultraschallsignal einen ersten Signalanteil und wenigstens einen zweiten Signalanteil aufweist.

Darüber hinaus geht die Erfindung aus von einem Verfahren zur Messung des Durchflusses eines durch ein Messrohr strömenden Mediums mittels eines Ultraschalldurchflussmessgeräts, wobei das Ultraschalldurchflussmessgerät wenigstens zwei Ultraschallwandler und wenigstens eine Steuer- und Auswerteeinheit aufweist, wobei das Messrohr eine Innenwand aufweist, wobei die Ultraschallwandler jeweils als Sender zur Aussendung eines Ultraschallsignals und/oder als Empfänger für den Empfang des Ultraschallsignals ausgestaltet sind, wobei die Ultraschallwandler in Strömungsrichtung gesehen versetzt derart an dem Messrohr angeordnet sind, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal nach wenigstens einer Reflexion an der Innenwand des Messrohrs empfängt, wobei das Ultraschallsignal einen ersten Signalanteil und wenigstens einen zweiten Signalanteil aufweist.

Die Messung des Durchflusses und der Geschwindigkeit eines durch ein Messrohr strömenden Mediums ist aus dem Stand der Technik bekannt. Ein Ultraschalldurchflussmessgerät weist üblicherweise wenigstens zwei Ultraschallwandler auf, die jeweils als Sender und Empfänger ausgestaltet sind und die derart versetzt entlang des Messrohrs angeordnet sind, dass in einer Konfiguration der Sender ein Ultraschallsignal in Strömungsrichtung aussendet, wobei das Ultraschallsignal von dem Empfänger empfangen wird, nachdem das Ultraschallsignal das Medium durchquert hat, und dass in einer zweiten Konfiguration der Sender, der zuvor als Empfänger gedient hat, ein Ultraschallsignal entlang desselben Messpfades entgegen der Strömungsrichtung aussendet, wobei das Ultraschallsignal von dem nun als Empfänger arbeitenden zweiten Ultraschallwandler empfangen wird. Aufgrund des Mitführeffektes erreichen die beiden zuvor beschriebenen Ultraschallsignale nach unterschiedlichen Laufzeiten den jeweiligen Empfänger. Aus dem Laufzeitunterschied der Signale kann die Fließgeschwindigkeit des Mediums bestimmt werden. Die Fließgeschwindigkeit des Mediums bestimmt den Volumendurchfluss.

Bei der Bestimmung des Volumendurchflusses ist ebenfalls das Strömungsprofil des strömenden Mediums zu berücksichtigen. Das Strömungsprofil des Mediums ist insbesondere abhängig von der Reynoldszahl.

Dabei ist der Fehler bei der Bestimmung des Durchflusses abhängig von der Stelle und der Anzahl Stellen des Strömungsprofils, bei der bzw. bei denen die Geschwindigkeit des Mediums gemessen wird. Wird die Geschwindigkeit des Mediums mit einem Einstrahl-Durchflussmesser bestimmt, wobei das Ultraschallsignal auf einem v-förmigen oder einfachen Messpfad durch die Mitte des Messrohrs verläuft und dabei die Messrohrachse mit r = 0 R schneidet, wobei R der Radius des Messrohrs ist, so ist die Messabweichung zwischen einem turbulenten und einem laminaren Strömungsprofil besonders hoch.

Es ist daher bekannt, zur Bestimmung des Durchflusses eines Mediums das Strömungsprofil an mehreren Stellen zu vermessen, um den zuvor beschriebenen Fehler zu minimieren. Ein Zweistrahl-Ultraschalldurchflussmesser, wobei jeweils ein Sender- und Empfängerpaar im Bereich neben der Mitte des Messrohrs angeordnet sind, wobei die Ultraschallsignale in parallelen Ebenen verlaufen, die die Messrohrachse nicht schneiden, weisen eine wesentlich geringere Messabweichung auf. Darüber hinaus sind Ultraschalldurchflussmessgeräte bekannt, die fünf planparallele Messpfade aufweisen, wobei fünf Sender- und Empfängerpaare, also zehn Ultraschallwandler entlang des Messrohrumfangs angeordnet sind. Jeder Messpfad wird definiert durch den kürzesten vertikalen Abstand zur Messrohrachse. Beispielsweise vermessen die Ultraschallwandler das Strömungsprofil auf fünf Messpfaden, die die Messrohrachse r = 0 R bzw. die Bereiche bei r = 0,5 R und bei r = 0,8 R jeweils zweimal schneiden. Gemäß dieser Ausgestaltung ist es möglich, das Strömungsprofil so fein zu erfassen, dass die Einflüsse des Strömungsprofils bei der Durchflussbestimmung weitestgehend kompensiert werden können. Nachteilig an dieser Ausgestaltung ist jedoch, dass ein solches Ultraschalldurchflussmessgerät aufgrund der Verwendung von zehn Ultraschallwandlern sehr teuer ist.

Aus dem Stand der Technik der EP 0 639 776 B1 ist weiterhin eine Konfiguration eines Ultraschalldurchflussmessgeräts bekannt, bei der das Ultraschallsignal akustische Pfade durchläuft, die unterschiedliche Grade einer Empfindlichkeit in Bezug auf eine Verwirbelung des Mediums aufweisen, wobei die akustischen Pfade wenigstens zwei Reflexionen gegen die Innenwand des Messrohrs aufweisen. Im Unterschied zu den zuvor dargestellten Ausgestaltungen verlaufen die akustischen Pfade nicht in einer Ebene. Die Ultraschallsignale überqueren einen großen Teil des Messrohrquerschnitts und liefern demzufolge ein zuverlässiges Bild der Strömung.

Schließlich ist es aus dem Stand der Technik der DE 40 10 148 A1 bekannt, dass wenn das Ultraschallsignal wenigstens einmal an der Innenwand des Messrohrs reflektiert wird, neben dem relevanten Nutzsignal auch Störsignale mit abgeschwächter Intensität, die im Randbereich des Ultraschallstrahlkegels angeordnet sind, über einen zweiten Messpfad den Empfänger erreichen. Dabei weisen das Nutzsignal und das Störsignal unterschiedliche Laufzeiten auf. Zur Abschwächung des Störsignals weist die in der DE 40 10 148 A1 offenbarte Anordnung am Reflexionsort der parasitären Strahlung eine defokussierende Maßnahme insbesondere in Form eines Konvexreflektors auf.

EP 1 736 741 A1 offenbart ein Ultraschalldurchflussmessgerät, wobei das von dem Sender ausgesendete Ultraschallsignal unterschiedliche Signalanteile aufweist und wobei die unterschiedlichen Signalanteile über Messpfade mit einer unterschiedlichen Anzahl an Reflexionen an der Innenseite des Messrohres den Empfänger erreichen.

US 9,453,749 B1 offenbart ein Ultraschalldurchflussmessgerät, wobei vier Ultraschallwandler in Form eines Parallelogramms derart angeordnet sind, dass ein Ultraschallsignal mehrere Signalpfade ausbildet, wobei ein erster Signalpfad eine Reflexion aufweist und wobei ein zweiter Signalpfad drei Reflexionen aufweist.

US 2012/285260 A1 offenbart ein Ultraschalldurchflussmessgerät.

Ausgehend von diesem Stand der Technik ist es Aufgabe der Erfindung ein Ultraschalldurchflussmessgerät anzugeben, mit dem unabhängig von dem Strömungsprofil der Durchfluss des Mediums zuverlässig bestimmt werden kann und das darüber hinaus kostengünstig ist. Zudem liegt der Erfindung die Aufgabe zugrunde, ein einfaches und kostengünstiges Verfahren zur Bestimmung des Durchflusses eines strömenden Mediums durch ein Messrohr unabhängig vom Strömungsprofil anzugeben.

Gemäß einer ersten Lehre der vorliegenden Erfindung ist die zuvor hergeleitete und dargestellte Aufgabe durch die Merkmale des unabhängigen Anspruchs 1 gelöst.

Erfindungsgemäß wurde erkannt, dass die verschiedenen Signalanteile eines von dem Sender ausgesendeten Ultraschallsignals genutzt werden können, um verschiedene stabile Messpfade innerhalb des Messrohrs zu realisieren, die zur Bestimmung der Geschwindigkeit bzw. des Durchflusses des strömenden Mediums genutzt werden können. Dabei durchläuft ein Signalanteil einen stabilen Messpfad genau dann, wenn der Signalanteil vom Empfänger empfangen wird und am Empfänger ein Signal erzeugt, das über dem Grundrauschen liegt.

Aufgrund der unterschiedlichen Winkel, mit denen die Signalanteile im Betrieb in das Messrohr eingestrahlt werden, durchlaufen die Signalanteile bzw. die Messpfade des Ultraschallmessgeräts verschiedene Bereiche des Strömungsprofils. Im Ergebnis weist das erfindungsgemäße Ultraschalldurchflussmessgerät damit den Vorteil auf, dass mit besonders wenigen Ultraschallwandlern eine hohe Anzahl an Messpfaden bereitgestellt wird, wobei das Strömungsprofil über die Messpfade besonders fein vermessen werden kann. Beispielsweise können mit einer Anordnung aus zwei Ultraschallwandlern wenigstens zwei unterschiedliche Messpfade realisiert werden.

In einer Ausgestaltung beträgt die Frequenz des von dem Sender ausgesendeten Ultraschallsignals ungefähr 2 MHz.

Gemäß einer vorteilhaften Ausgestaltung weist das Messrohr einen inneren Querschnitt mit einem Radius R auf und der erste und der zweite Ultraschallwandler sind derart angeordnet und ausgerichtet, dass der erste Messpfad und der zweite Messpfad, vorzugsweise ausschließlich, im Randbereich des inneren Querschnitts, vorzugsweise in einem Bereich bei einem Radius r ≥ 0,5 R, angeordnet sind. Dies hat den Vorteil, dass der Randbereich der Strömung, in dem die Messabweichung zwischen einem laminaren und einem turbulenten Strömungsprofil besonders klein ist, bei der Bestimmung des Durchflusses berücksichtigt wird.

Gemäß einer weiteren Ausgestaltung schneidet der erste Messpfad den Bereich des Strömungsprofils bei einem Radius r = 0,5 R wenigstens einmal, vorzugsweise zweimal, besonders bevorzugt dreimal. Der zweite Messpfad schneidet den Bereich des Strömungsprofils bei einem Radius r = 0,8 R wenigstens einmal, vorzugsweise zweimal oder dreimal oder viermal oder fünfmal.

Der erste und der zweite Messpfad sind gemäß einer weiteren Ausgestaltung in einzelne Messpfadabschnitte unterteilt, wobei jeder Messpfadabschnitt entweder zwischen zwei Reflexionen oder zwischen einer Reflexion und einem Ultraschallwandler liegt. Besonders bevorzugt schneidet jeder Messpfadabschnitt des ersten Messpfades das Strömungsprofil bei einem Radius r = 0,5 R und jeder Messpfadabschnitt des zweiten Messpfades schneidet das Strömungsprofil bei einem Radius r = 0,8 R.

Ebenfalls bevorzugt ist es, wenn der erste Messpfad drei Messpfadabschnitte aufweist und wenn der zweite Messpfad fünf Messpfadabschnitte aufweist.

Gemäß einer weiteren bevorzugten Ausgestaltung sind die Ultraschallwandler derart angeordnet und ausgerichtet, dass der erste Messpfad wenigstens zwei Reflexionen, insbesondere genau zwei Reflexionen, an der Innenwand des Messrohrs aufweist und dass der zweite Messpfad wenigstens drei, vorzugsweise wenigstens vier Reflexionen und insbesondere genau vier Reflexionen, an der Innenwand aufweist.

Gemäß einer weiteren Ausgestaltung sind die Ultraschallwandler derart ausgerichtet und angeordnet, dass drei stabile Messpfade vorhanden sind, wobei der erste Messpfad zwei Reflexionen an der Innenwand aufweist, wobei der zweite Messpfad vier Reflexionen an der Innenwand aufweist und wobei der dritte Messpfad drei Reflexionen an der Innenwand aufweist. Gemäß dieser Ausgestaltung kann es vorkommen, dass die Laufzeiten der einzelnen Signalanteile, die über die unterschiedlichen Messpfade den Empfänger erreichen, sich nicht in der Weise unterscheiden, dass die den Signalanteilen zugeordneten Signale am Empfänger unterschieden werden können.

Erfindungsgemäß ist wenigstens ein weiterer Signalanteil, der über einen weiteren stabilen Messpfad zu dem Empfänger gelangt und wenigstens ein Mittel zur Unterdrückung des wenigstens einen weiteren Signalanteils des Ultraschallsignals vorhanden. Die Erfindung weist den Vorteil auf, dass parasitäre Signalanteile, die einen Fehler der Bestimmung der Laufzeit der übrigen Signalanteile bewirken, gezielt unterdrückt werden können. Die zur Bestimmung der Geschwindigkeit des Mediums genutzten Signalanteile können gemäß der Erfindung besonders leicht am Empfänger bzw. von der Auswerteeinheit separiert werden.

Sind beispielsweise die Ultraschallwandler derart ausgerichtet, dass drei stabile Messpfade, die die Bereiche des Strömungsprofils bei r = 0,5 R, bei r= 0,7 R und bei r = 0,8 R schneiden, vorhanden sind, so ist das Mittel zur Unterdrückung wenigstens eines Signalanteils derart angeordnet, dass der Messpfad bzw. der Signalanteil, der den Bereich bei r = 0,7 R schneidet, unterdrückt wird.

In einer weiteren Ausgestaltung ist das Mittel zur Unterdrückung als wenigstens eine Ausnehmung der Innenwand des Messrohrs ausgestaltet.

Gemäß einer weiteren Ausgestaltung ist die Ausnehmung mit einem das Ultraschallsignal absorbierenden Material gefüllt.

Alternativ oder zusätzlich ist die Ausnehmung gemäß einer nächsten Ausgestaltung mit einem Material mit einer strukturbehafteten Oberfläche zur Streuung des zu unterdrückenden Signalanteils gefüllt.

Die Ultraschallwandler sind vorzugsweise derart ausgerichtet und angeordnet, dass der zu unterdrückende Signalanteil, vorzugsweise unmittelbar, in die Ausnehmung gelenkt wird, wodurch das Erreichen des Empfängers dieses Signalanteils verhindert wird. Wenn es heißt, dass der zu unterdrückende Signalanteil unmittelbar in die Ausnehmung gelenkt wird, so ist damit gemeint, dass der zu unterdrückende Signalanteil nicht zuvor an der Innenwand des Messrohrs reflektiert wird.

Sind die Ultraschallwandler derart ausgestaltet, dass sie sowohl als Sender als auch als Empfänger arbeiten können, so sind vorzugsweise zwei Ausnehmungen vorhanden, wobei die Ausnehmungen jeweils derart in dem Messrohr angeordnet sind, dass der zu unterdrückende Signalanteil von jedem Sender unmittelbar in eine Ausnehmung gelenkt wird.

Gemäß einer weiteren Ausgestaltung ist die Ausnehmung als Loch ausgestaltet, wobei das Loch zur Außenwand des Messrohrs mittels einer Abdichtung verschlossen ist. Auf diese Weise kann ein Leckverlust des Mediums vermieden werden. Beispielsweise kann die Abdichtung durch Schweißen angebracht sein oder ein Elastomer aufweisen. Wird der zu unterdrückende Signalanteil in das Loch geleitet, so wird dieser Signalanteil in vorteilhafter Weise gänzlich aus dem Inneren des Messrohrs entfernt.

Besonders bevorzugt wird die Ausnehmung bereits während der Herstellung des Messrohrs, beispielsweise durch Spritzgießen, vorgesehen.

Ist die Ausnehmung mit einem Material gefüllt, das eine strukturbehaftete Oberfläche aufweist, so wird der zu unterdrückende Signalanteil an der Oberfläche diffus gestreut. Dadurch wird der zu unterdrückende parasitäre Signalanteil ebenfalls daran gehindert, den Empfänger zu erreichen oder er wird zumindest so weit abgeschwächt, dass das entsprechende Signal am Empfänger vom Rauschen nicht mehr zu unterscheiden ist. Zudem weist die Ausgestaltung, in der die Ausnehmung mit einem das Ultraschallsignal absorbierenden Material und/oder einem Material mit einer strukturbehafteten Oberfläche zur Streuung des zu unterdrückenden Messpfades ausgestattet ist, den Vorteil auf, dass der Einfluss auf das strömende Medium minimal ist und insbesondere das Entstehen von Wirbeln weitestgehend vermieden werden kann.

Gemäß einer weiteren besonders vorteilhaften Ausgestaltung ist der als Sender ausgestaltete Ultraschallwandler derart ausgerichtet, dass das Ultraschallsignal in Richtung des Signalanteils, der über den Messpfad mit der höchsten Anzahl an Reflexionen zu dem Empfänger gelangt, ausgelenkt ist, sodass vorzugsweise die akustische Energie dieses Signalanteils höher als die akustische Energie des anderen Signalanteils oder der anderen Signalanteile ist. Gemäß dieser Ausgestaltung kann die Abschwächung des Signalanteils, der auf dem Messpfad mit den meisten Reflexionen und damit auch auf dem längsten Messpfad zu dem Empfänger gelangt, ausgeglichen werden.

Besonders bevorzugt ist der als Sender ausgestaltete Ultraschallwandler derart ausgerichtet, dass der erste Signalanteil und der zweite Signalanteil an dem als Empfänger ausgestalteten Ultraschallwandler im Wesentlichen dieselbe akustische Energie aufweisen.

Gemäß einer weiteren bevorzugten Ausgestaltung sind wenigstens ein dritter und ein vierter Ultraschallwandler vorhanden, die jeweils als Sender und/oder als Empfänger ausgestaltet sind, wobei der dritte und der vierte Ultraschallwandler in Strömungsrichtung versetzt derart an dem Messrohr angeordnet sind, dass der Messpfad zwischen dem dritten und dem vierten Ultraschallwandler die Messrohrachse bei r = 0 R schneidet. Der Messpfad zwischen dem dritten und dem vierten Ultraschallwandler kann entweder einfach durch das Messrohr verlaufen oder alternativ v-förmig ausgestaltet sein. Diese Ausgestaltung weist den Vorteil auf, dass bei der Bestimmung der Geschwindigkeit des Mediums sowohl der mittlere Bereich des Strömungsprofils als auch der Randbereich des Strömungsprofils berücksichtigt werden. Aufgrund der besonders feinen Abtastung des Strömungsprofils ist der Fehler bei der Bestimmung der Geschwindigkeit besonders klein.

Gemäß einer besonders vorteilhaften Ausgestaltung sind sämtliche Ultraschallwandler auf derselben Seite des Messrohrs angeordnet. Dies hat den Vorteil, dass die Elektronik zur Steuerung der Ultraschallwandler und zur Auswertung der gemessenen Signale besonders einfach über besonders kurze Verbindungen mit den Ultraschallwandlern verbunden werden kann.

Vorzugsweise führt das Ultraschalldurchflussmessgerät im Betrieb eines der nachfolgend beschriebenen Verfahren durch.

Gemäß einer zweiten Lehre der vorliegenden Erfindung wird die eingangs dargelegte Aufgabe durch die Merkmale des unabhängigen Verfahrensanspruchs 11 gelöst.

Dieses Verfahren weist, wie bereits dargelegt, den Vorteil auf, dass durch die Nutzung unterschiedlicher Signalanteile eines Ultraschallsignals derart, dass die Signalanteile unterschiedliche Messpfade und damit verschiedene Bereiche des Strömungsprofils abtasten, die Bestimmung der Geschwindigkeit und des Durchflusses besonders zuverlässig und gleichzeitig besonders einfach und kostengünstig erfolgen kann.

Vorzugsweise ist das Ultraschalldurchflussmessgerät gemäß einer der zuvor beschriebenen Ausgestaltungen realisiert.

Erfindungsgemäß ist wenigstens ein weiterer Signalanteil, der über einen weiteren stabilen Messpfad zu dem Empfänger gelangt, vorhanden, wobei der wenigstens eine weitere Signalanteil des Ultraschallsignals durch ein Mittel zur Unterdrückung unterdrückt wird.

Zudem ist es vorteilhaft, wenn wenigstens ein dritter und ein vierter Ultraschallwandler vorhanden sind, die jeweils als Sender und/oder als Empfänger ausgestaltet sind, wobei der dritte und der vierte Ultraschallwandler in Strömungsrichtung versetzt derart an dem Messrohr angeordnet sind, dass der Messpfad zwischen dem dritten und dem vierten Ultraschallwandler die mittlere Achse bei r = 0 R schneidet. Der als Sender ausgestaltete dritte oder vierte Ultraschallwandler sendet ein Ultraschallsignal aus, das von dem als Empfänger ausgestalteten dritten oder vierten Ultraschallwandler empfangen wird, wobei die Auswerteeinheit die Laufzeit des Signals bei der Bestimmung der Geschwindigkeit berücksichtigt.

Der Messpfad zwischen dem dritten und dem vierten Ultraschallwandler kann entweder einfach durch das Messrohr verlaufen oder alternativ v-förmig ausgestaltet sein.

Im Einzelnen gibt es nun eine Vielzahl von Möglichkeiten das erfindungsgemäße Ultraschalldurchflussmessgerät und das erfindungsgemäße Verfahren auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig. 1: eine schematische Darstellung des Verlaufs der Messpfade eines ersten Ausführungsbeispiels des erfindungsgemäßen Ultraschalldurchflussmessgeräts,
- Fig. 2: eine schematische Darstellung des Verlaufs der Messpfade eines zweiten Ausführungsbeispiels des erfindungsgemäßen Ultraschalldurchflussmessgeräts,
- Fig. 3: eine schematische Darstellung des Verlaufs der Messpfade eines dritten Ausführungsbeispiels des erfindungsgemäßen Ultraschalldurchflussmessgeräts,
- Fig. 4: eine schematische Darstellung des Verlaufs der Messpfade eines vierten Ausführungsbeispiels des erfindungsgemäßen Ultraschalldurchflussmessgeräts,
- Fig. 5: ein fünftes Ausführungsbeispiel eines Ultraschalldurchflussmessgeräts,
- Fig. 6: das fünfte Ausführungsbeispiel des Ultraschalldurchflussmessgeräts in Schnittansicht,
- Fig. 7: ein erstes Ausführungsbeispiel eines erfindungsgemäßen Verfahrens und
- Fig. 8: ein zweites Ausführungsbeispiel eines erfindungsgemäßen Verfahrens.

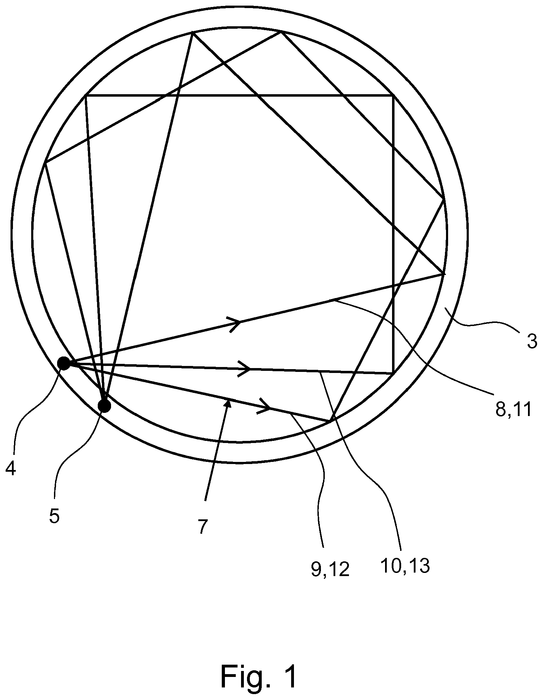

In Fig. 1 ist dargestellt eine schematische Darstellung des Verlaufs unterschiedlicher Messpfade 11, 12, 13 eines ersten Ausführungsbeispiels des erfindungsgemäßen Ultraschalldurchflussmessgeräts 1 zur Messung des Durchflusses eines durch ein Messrohr 3 strömenden Mediums. Dabei sind zwei Ultraschallwandler 4, 5 vorhanden und eine hier nicht dargestellte Ansteuer- und Auswerteeinheit 6, die mit den Ultraschallwandlern 4, 5 verbunden ist. Die Ultraschallwandler 4, 5 können jeweils als Sender 4, 5 zur Aussendung eines Ultraschallsignals 7 und als Empfänger 4, 5 für den Empfang des Ultraschallsignals 7 arbeiten. Das Messrohr 3 weist den Radius R auf. Zudem weist das Messrohr 3 eine Messrohrachse bei dem Radius r = 0 R auf.

Die Ultraschallwandler 4, 5 sind in Strömungsrichtung gesehen versetzt derart an dem Messrohr 3 angeordnet, dass der Sender 4, 5 im Betrieb ein Ultraschallsignal 7 in Strömungsrichtung oder entgegen der Strömungsrichtung aussendet und dass der Empfänger 4,5 das von dem Sender ausgesendete Ultraschallsignal 7 nach wenigstens einer Reflexion an der Innenwand des Messrohrs 3 empfängt, wobei das Ultraschallsignal 7 im dargestellten Ausführungsbeispiel drei Signalanteile 8, 9, 10 aufweist.

Ein erster Signalanteil 8 verläuft auf einem dreieckigen ersten Messpfad 11 durch das Messrohr 3. Dabei schneidet jeder Messpfadabschnitt des ersten Messpfads 11 den Bereich bei r = 0,5 R. Ein zweiter Signalanteil 9 verläuft auf einem fünfeckigen zweiten Messpfad 12 von dem Sender 4, 5 zu dem Empfänger 4, 5. Dabei schneidet jeder Messpfadabschnitt des zweiten Messpfads 12 den Bereich bei r = 0,8 R. Ein dritter Signalanteil 10 verläuft auf einem viereckigen dritten Messpfad 13 von dem Sender 4, 5 zu dem Empfänger 4, 5. Dabei schneidet jeder Messpfadabschnitt des dritten Messpfads 13 den Bereich bei r = 0,7 R.

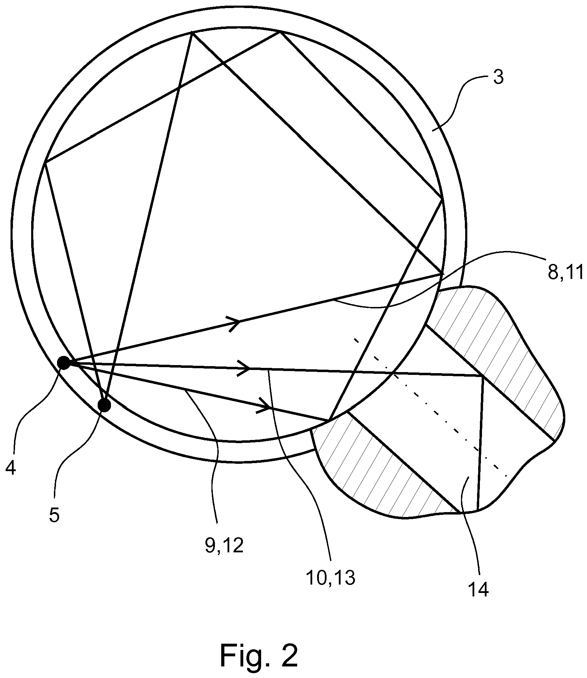

Fig. 2 zeigt eine schematische Darstellung des Verlaufs unterschiedlicher Messpfade 11, 12, 13 eines zweiten Ausführungsbeispiels eines Ultraschalldurchflussmessgeräts 1. Dabei weist das Messrohr 3 eine Ausnehmung 14 auf, in die der dritte Messpfad 13 und insofern im Betrieb der dritte Signalanteil 10 gelenkt wird. In der Folge wird der dritte Signalanteil 10 nicht von dem Empfänger 5 registriert, sodass der dritte parasitäre Signalanteil 10 die Bestimmung der Laufzeit der übrigen Signalanteile 8, 9 nicht beeinflusst.

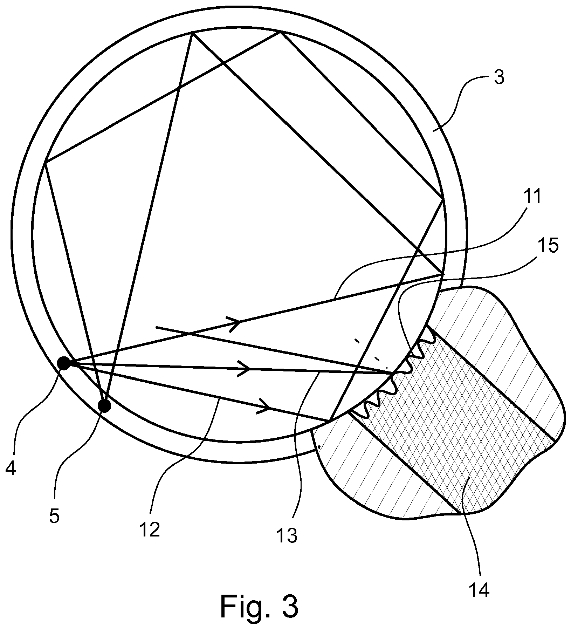

Fig. 3 zeigt eine schematische Darstellung des Verlaufs der Messpfade 11, 12, 13 eines dritten Ausführungsbeispiels des Ultraschalldurchflussmessgeräts 1, wobei das Messrohr 3 ebenfalls eine Ausnehmung 14 zur Unterdrückung des dritten Messpfades 13 bzw. des dritten Signalanteils 10 aufweist. Im Unterschied zu dem in Fig. 2 dargestellten Ausführungsbeispiel ist die Ausnehmung 14 mit einem Material gefüllt, das eine strukturierte Oberfläche 15 aufweist. Dabei ist die Oberfläche 15 derart strukturiert, dass der auf die Oberfläche 15 treffende Signalanteil 13 diffus gestreut wird. Durch die Streuung wird ebenfalls erreicht, dass der dritte Signalanteil 10 den Empfänger 5 nicht erreicht und insofern die Bestimmung der Geschwindigkeit nicht beeinflusst.

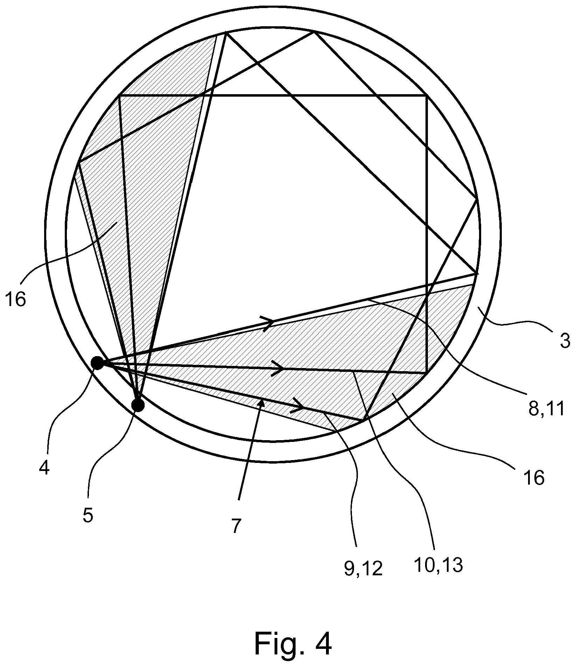

Fig. 4 zeigt ebenfalls eine schematische Darstellung des Verlaufs der Messpfade 11, 12, 13 eines vierten Ausführungsbeispiels des erfindungsgemäßen Ultraschalldurchflussmessgeräts 1. Dargestellt ist insbesondere der von dem Ultraschallwandler 4, 5 ausgesendete Ultraschallkegel 16. Dabei markieren die Grenzen des Ultraschallkegels den Bereich, bei dem der Schalldruckpegel um 6 dB geschwächt ist. Dabei ist der Sender 4, 5 jeweils derart ausgerichtet, dass der zweite Signalanteil 9 mehr akustische Energie als der erste Signalanteil 8 aufweist, und zwar dadurch, dass der Ultraschallkegel 16 in Richtung des zweiten Signalanteils 9 ausgelenkt ist. Mit dieser Ausrichtung kann der Verlust an akustischer Energie, den der zweite Signalanteil 9 aufgrund der höheren Anzahl an Reflexionen erleidet, ausgeglichen werden. Der Sender 4, 5 ist dabei derart in Richtung des zweiten Signalanteils 9 ausgelenkt, dass der erste Signalanteil 8 und der zweite Signalanteil 9 am Empfänger die gleiche akustische Energie aufweisen.

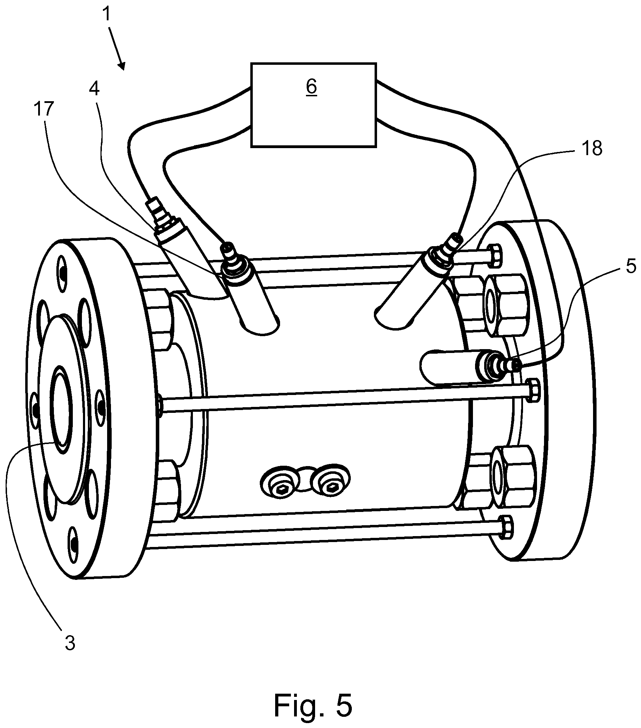

In Fig. 5 ist ein fünftes Ausführungsbeispiel eines Ultraschalldurchflussmessgeräts 1 dargestellt. Das Ultraschalldurchflussmessgerät 1 weist ein erstes Ultraschallwandlerpaar 4, 5 auf, das in Strömungsrichtung gesehen versetzt an dem Messrohr 3 angeordnet ist. Dabei sind die Ultraschallwandler 4, 5 derart aufeinander ausgerichtet, dass ein erster Signalanteil 8 und ein zweiter Signalanteil 9 des von dem Sender 4, 5 ausgesendeten Ultraschallsignals 7 den Empfänger 4, 5 über einen ersten Messpfad 11 bzw. über einen zweiten Messpfad 12 erreicht. Darüber hinaus sind ein dritter Ultraschallwandler 17 und ein vierter Ultraschallwandler 18 vorhanden, wobei die Ultraschallwandler 17, 18 jeweils als Sender 17, 18 und als Empfänger 17, 18 ausgestaltet sind. Der dritte und der vierte Ultraschallwandler 17, 18 sind in Strömungsrichtung versetzt derart an dem Messrohr 3 angeordnet, dass der Messpfad zwischen dem dritten und dem vierten Ultraschallwandler 17, 18 die Messrohrachse bei r = 0 R schneidet. Zudem sind sämtliche Ultraschallwandler 4, 5, 17, 18 auf derselben Seite des Messrohrs 3 angeordnet, wodurch die externe elektrische Anbindung (Verkabelung) an die Ultraschallwandler 4, 5, 17, 18 besonders einfach ist.

Darüber hinaus ist eine Ausnehmung 14 vorhanden, in die der parasitäre Signalanteil 13 gelenkt wird, sodass der Signalanteil 13 keine Fehler bei der Bestimmung der Laufzeit der Signalanteile 8 und 9 am Empfänger 4, 5 verursacht.

Das dargestellte Ausführungsbeispiel weist den Vorteil auf, dass zur Bestimmung des Durchflusses des im Betrieb durch das Messrohr 3 fließenden Mediums das Strömungsprofil des Mediums aufgrund der hohen Anzahl an Messpfaden 11, 13 besonders fein vermessen werden kann, wodurch der Fehler bei der Bestimmung des Durchflusses besonders klein ist. Darüber hinaus wird die Realisierung der Messpfade 11, 13 im Vergleich zu den aus dem Stand der Technik bekannten Anordnungen mit einer erheblich reduzierten Anzahl an Ultraschallwandlern 4, 5, 17, 18 erreicht, wodurch das dargestellte Ultraschalldurchflussmessgerät 1 besonders kostengünstig ist.

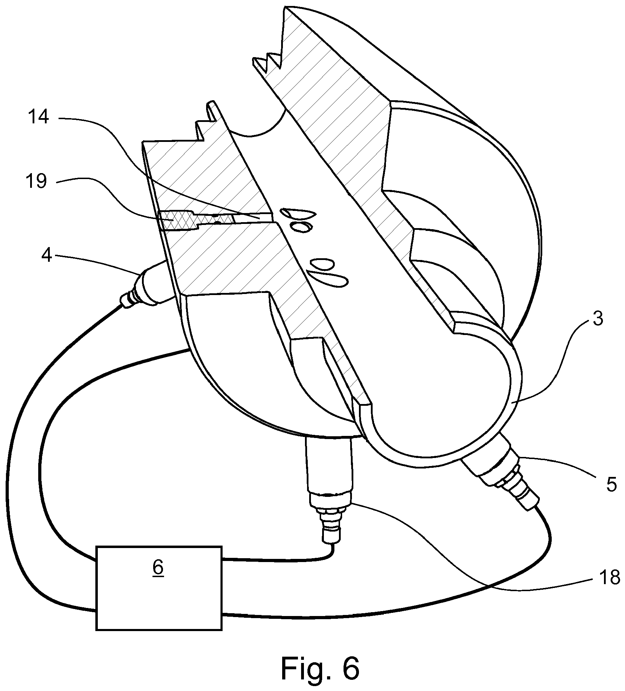

Fig. 6 zeigt eine Schnittdarstellung des in Fig. 5 gezeigten fünften Ausführungsbeispiels eines Ultraschalldurchflussmessgeräts 1. Die Darstellung zeigt das Messrohr 3 sowie die Anordnung der Ultraschallwandler 4, 5, 17, 18. Das Messrohr 3 weist eine Ausnehmung 14 auf, in die im Betrieb der zu unterdrückende Signalanteil 10 gelenkt wird. Die Ausnehmung 14 ist mit einem abdichtenden Material 19 gefüllt, wodurch ein Leckverlust vermieden werden kann.

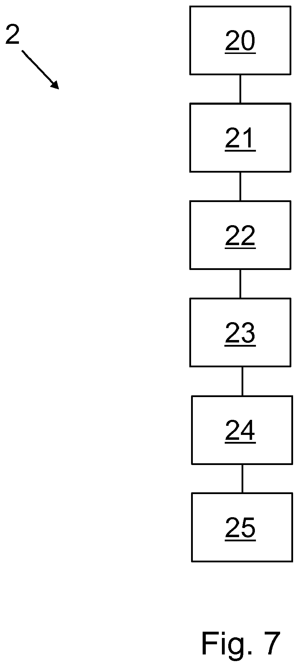

Fig. 7 zeigt ein erstes Ausführungsbeispiel eines erfindungsgemäßen Verfahrens 2 zur Messung des Durchflusses eines durch ein Messrohr 3 strömenden Mediums mittels eines Ultraschalldurchflussmessgeräts 1, wobei das Ultraschalldurchflussmessgerät 1 gemäß der in Fig. 2 gezeigten Anordnung ausgestaltet ist.

In einem ersten Schritt 20 sendet der als Sender arbeitende Ultraschallwandler 4, 5 ein Ultraschallsignal 7 in Strömungsrichtung in das Messrohr 3, wobei das Ultraschallsignal 7 einen ersten Signalanteil 8, einen zweiten Signalanteil 9 und einen dritten parasitären Signalanteil 10 aufweist. Zur Unterdrückung des parasitären Signalanteils 10 wird dieser in die Ausnehmung 14 gelenkt.

Der erste Signalanteil 8 erreicht über einen ersten Messpfad 10 den Empfänger 4, 5 und der zweite Signalanteil 9 erreicht über einen zweiten Messpfad 11 den Empfänger 4, 5.

Die Steuer- und Auswerteeinheit 6 bestimmt in einem nächsten Schritt 21 die Laufzeit des ersten Signalanteils 8 und die Laufzeit des zweiten Signalanteils 9.

Anschließend sendet 22 der Sender 4, 5, der zuvor als Empfänger 4, 5 tätig war, ein Ultraschallsignal 7 entgegen der Strömungsrichtung in das Messrohr 3.

Der Empfänger 4, 5 empfängt das Ultraschallsignal 7 und leitet dieses an die Steuer- und Auswerteeinheit 6 weiter.

Die Steuer- und Auswerteeinheit 6 bestimmt in einem nächsten Schritt 23 die Laufzeiten des ersten und des zweiten Signalanteils 8, 9.

Anschließend bestimmt die Steuer- und Auswerteeinheit 6 aus dem Laufzeitunterschied der hin- und rückläufigen Signalanteile die Geschwindigkeit des Mediums 24 und aus der Geschwindigkeit des Mediums bestimmt die Steuer- und Auswerteeinheit 6 in einem nächsten Schritt 25 den Durchfluss des Mediums.

Das Verfahren 2 weist den Vorteil auf, dass mittels eines einzigen Ultraschallwandlerpaares zwei Messpfade 11, 12 zu Vermessung des Strömungsprofils des Mediums realisiert werden können, sodass zum einen das Strömungsprofil besonders fein abgetastet werden kann und zum anderen das Verfahren aufgrund der reduzierten Anzahl an Ultraschallwandlern 4, 5 besonders kostengünstig ist.

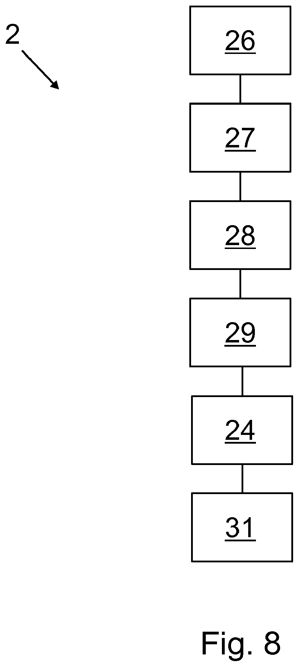

Fig. 8 zeigt ein zweites Ausführungsbeispiel eines erfindungsgemäßen Verfahrens 2, wobei das Ultraschalldurchflussmessgerät 1 gemäß dem in Fig. 5 dargestellten Ausführungsbeispiel ausgestaltet ist. Demnach weist das Ultraschalldurchflussmessgerät 1 vier Ultraschallwandler 4, 5, 17,18 auf, wobei das erste Ultraschallwandlerpaar 4, 5 den Randbereich des Strömungsprofils vermisst und wobei das zweite Ultraschallwandlerpaar 17, 18 den mittleren Bereich des Strömungsprofils mittels eines zweiten Ultraschallsignals 7a vermisst.

In einem ersten Schritt 26 sendet der als Sender arbeitende Ultraschallwandler 4, 5 ein erstes Ultraschallsignal 7 in Strömungsrichtung in das Messrohr 3, wobei das Ultraschallsignal 7 einen ersten Signalanteil 8, einen zweiten Signalanteil 9 und einen dritten parasitären Signalanteil 10 aufweist. Zur Unterdrückung des parasitären Signalanteils wird dieser in die Ausnehmung 14 gelenkt. Zeitgleich sendet der als Sender arbeitende Ultraschallwandler 17, 18 ein zweites Ultraschallsignal 7a in das Messrohr.

Die Signalanteile 8 und 9 des Ultraschallsignals 7 werden von dem als Empfänger arbeitenden Ultraschallwandler 4, 5 empfangen und das Ultraschallsignal 7a wird von dem als Empfänger arbeitenden Ultraschallwandler 17, 18 empfangen.

Die Steuer- und Auswerteeinheit 6 bestimmt in einem nächsten Schritt 27 die Laufzeiten des ersten Signalanteils 8 und des zweiten Signalanteils 9 und des Ultraschallsignals 7a.

Anschließend senden 28 die Sender 4, 5, 17, 18, die zuvor als Empfänger 4, 5, 17, 18 tätig waren, ein Ultraschallsignal 7 bzw. 7a entgegen der Strömungsrichtung in das Messrohr 3.

Die Empfänger 4, 5, 17, 18 empfangen das Ultraschallsignal 7 bzw. 7a und leiten dieses an die Steuer- und Auswerteeinheit 6 weiter, hier mittelbar als elektrisches Messsignal.

Die Steuer- und Auswerteeinheit 6 bestimmt in einem nächsten Schritt 29 die Laufzeiten des ersten und des zweiten Signalanteils 8, 9 und die Laufzeit des Ultraschallsignals 7a.

Anschließend bestimmt die Steuer- und Auswerteeinheit 6 aus dem Laufzeitunterschied der hin- und rückläufigen Signalanteile 8, 9 bzw. des Ultraschallsignals 7a die Geschwindigkeit des Mediums 30 und aus der Geschwindigkeit des Mediums bestimmt die Steuer- und Auswerteeinheit 6 in einem nächsten Schritt 31 den Durchfluss des Mediums.

Das in Fig. 8 dargestellte Verfahren 2 weist den Vorteil auf, dass mittels zwei Ultraschallwandlerpaaren 4, 5 und 17, 18 das Strömungsprofil des Mediums sowohl im mittleren Bereich als auch im Randbereich besonders fein abgetastet werden kann, wodurch der Fehler bei der Bestimmung des Durchflusses des Mediums besonders klein ist. Darüber hinaus ist das Verfahren aufgrund der reduzierten Anzahl an Ultraschallwandlern besonders kostengünstig.

### Bezugszeichen

- 1: Ultraschalldurchflussmessgerät
- 2: Verfahren zur Messung des Durchflusses
- 3: Messrohr
- 4: Ultraschallwandler
- 5: Ultraschallwandler
- 6: Ansteuer- und Auswerteeinheit
- 7: Ultraschallsignal
- 7a: Ultraschallsignal
- 8: Signalanteil
- 9: Signalanteil
- 10: Signalanteil
- 11: Messpfad
- 12: Messpfad
- 13: Messpfad
- 14: Ausnehmung
- 15: strukturierte Oberfläche
- 16: Ultraschallkegel
- 17: Ultraschallwandler
- 18: Ultraschallwandler
- 19: abdichtendes Material
- 20: Aussenden eines Ultraschallsignals in Strömungsrichtung
- 21: Bestimmung der Laufzeit
- 22: Aussenden eines Ultraschallsignals entgegen der Strömungsrichtung
- 23: Bestimmung der Laufzeit
- 24: Bestimmung der Geschwindigkeit
- 25: Bestimmung des Durchflusses
- 26: Aussenden eines ersten und eines zweiten Ultraschallsignals in Strömungsrichtung
- 27: Bestimmung der Laufzeiten
- 28: Aussenden eines ersten und eines zweiten Ultraschallsignals entgegen der Strömungsrichtung
- 29: Bestimmung der Laufzeiten
- 30: Bestimmung der Geschwindigkeit
- 31: Bestimmung des Durchflusses

## Patentansprüche

1. Ultraschalldurchflussmessgerät (1) zur Messung des Durchflusses eines durch ein Messrohr (3) strömenden Mediums, mit wenigstens zwei Ultraschallwandlern (4, 5) und wenigstens einer Steuer- und Auswerteeinheit (6), wobei das Messrohr (3) eine Innenwand aufweist, wobei die Ultraschallwandler (4, 5) jeweils als Sender (4, 5) zur Aussendung eines Ultraschallsignals (7) und/oder als Empfänger (4, 5) für den Empfang des Ultraschallsignals (7) ausgestaltet sind, wobei die Ultraschallwandler (4, 5) in Strömungsrichtung gesehen versetzt derart an dem Messrohr (3) angeordnet sind, dass der jeweilige (4, 5) Sender im Betrieb ein Ultraschallsignal (7) in Strömungsrichtung oder entgegen der Strömungsrichtung aussendet und dass der Empfänger (4, 5) das von dem Sender (4, 5) ausgesendete Ultraschallsignal (7) nach wenigstens einer Reflexion an der Innenwand des Messrohrs (3) empfängt, wobei das Ultraschallsignal (7) einen ersten Signalanteil (8) und wenigstens einen zweiten Signalanteil (9) aufweist,
wobei die Ultraschallwandler (4, 5) derart aufeinander ausgerichtet sind, dass der erste Signalanteil (8) des Ultraschallsignals (7) über einen ersten Messpfad (11) von dem Sender (4, 5) zu dem Empfänger (4, 5) gelangt und dass der zweite Signalanteil (9) des Ultraschallsignals (7) über einen zweiten Messpfad (12) von dem Sender (4, 5) zu dem Empfänger (4, 5) gelangt, wobei der erste Messpfad (11) und der zweite Messpfad (12) eine unterschiedliche Anzahl an Reflexionen an der Innenwand des Messrohrs (3) aufweisen und wobei der erste Signalanteil (8) und der zweite Signalanteil (9) durch unterschiedliche Laufzeiten am Empfänger (4, 5) unterscheidbar sind und wobei die Steuer- und Auswerteeinheit (6) derart ausgestaltet ist, dass die Steuer- und Auswerteeinheit (6) aus der Laufzeit des ersten Signalanteils (8) und aus der Laufzeit des zweiten Signalanteils (9) die Geschwindigkeit und den Durchfluss des Mediums bestimmt,
**dadurch gekennzeichnet,**
**dass** wenigstens ein weiterer Signalanteil (10), der über einen weiteren stabilen Messpfad (13) zu dem Empfänger (4, 5) gelangt, vorhanden ist und dass wenigstens ein Mittel (14, 15) zur Unterdrückung des wenigstens einen weiteren Signalanteils (10) des Ultraschallsignals (7) vorhanden ist.

2. Ultraschalldurchflussmessgerät (1) nach Anspruch 1, **dadurch gekennzeichnet, dass** das Messrohr (3) einen inneren Querschnitt mit einem Radius R aufweist und dass der erste und der zweite Ultraschallwandler (4, 5) derart angeordnet und ausgerichtet sind, dass der erste Messpfad (11) und der zweite Messpfad (12), vorzugsweise ausschließlich, im Randbereich des inneren Querschnitts, vorzugsweise in einem Bereich bei einem Radius r ≥ 0,5R, angeordnet sind.

3. Ultraschalldurchflussmessgerät (1) nach einem der Ansprüche 1 oder 2, **dadurch gekennzeichnet, dass** die Ultraschallwandler (4, 5) derart ausgerichtet sind, dass der erste Messpfad (11) wenigstens zwei Reflexionen an der Innenwand des Messrohrs (3) aufweist und dass der zweite Messpfad (12) wenigstens drei, vorzugsweise wenigstens vier Reflexionen an der Innenwand aufweist.

4. Ultraschalldurchflussmessgerät (1) nach einem der Ansprüche 1 bis 3, **dadurch gekennzeichnet, dass** das Mittel (14, 15) zur Unterdrückung als wenigstens eine Ausnehmung (14) der Innenwand des Messrohrs (3) ausgestaltet ist.

5. Ultraschalldurchflussmessgerät nach Anspruch 4, **dadurch gekennzeichnet, dass** die Ausnehmung (14) mit einem das Ultraschallsignal absorbierenden Material gefüllt ist.

6. Ultraschalldurchflussmessgerät nach einem der Ansprüche 4 oder 5, **dadurch gekennzeichnet, dass** die Ausnehmung alternativ oder zusätzlich mit einem Material mit einer strukturbehafteten Oberfläche (15) zur Streuung des zu unterdrückenden Signalanteils (8, 9, 10) gefüllt ist.

7. Ultraschalldurchflussmessgerät (1) nach einem der Ansprüche 1 bis 6, **dadurch gekennzeichnet, dass** der als Sender ausgestaltete Ultraschallwandler (4, 5) derart ausgerichtet ist, dass das Ultraschallsignal (7) in Richtung des Signalanteils (8, 9, 10), der über den Messpfad (11, 12, 13) mit der höchsten Anzahl an Reflexionen zu dem als Empfänger ausgestalteten Ultraschallwandler gelangt, ausgelenkt ist, sodass vorzugsweise die akustische Energie dieses Signalanteils (8, 9, 10) höher als die akustische Energie des anderen Signalanteils (8, 9, 10) oder der anderen Signalanteile (8, 9, 10) ist.

8. Ultraschalldurchflussmessgerät (1) nach einem der Anspruch 7, **dadurch gekennzeichnet, dass** der als Sender ausgestaltete Ultraschallwandler (4, 5) derart ausgerichtet ist, dass zumindest der erste Signalanteil (8) und der zweite Signalanteil (9) an dem als Empfänger ausgestalteten Ultraschallwandler (4, 5) im Wesentlichen dieselbe akustische Energie aufweisen.

9. Ultraschalldurchflussmessgerät (1) nach einem der Ansprüche 1 bis 8, **dadurch gekennzeichnet, dass** wenigstens ein dritter und ein vierter Ultraschallwandler (17, 18) vorhanden sind, die jeweils als Sender (17, 18) und/oder als Empfänger (17, 18) ausgestaltet sind, wobei der dritte und der vierte Ultraschallwandler (17, 18) in Strömungsrichtung versetzt derart an dem Messrohr (3) angeordnet sind, dass der Messpfad zwischen dem dritten und dem vierten Ultraschallwandler (17, 18) die Messrohrachse bei r = 0 R schneidet.

10. Ultraschalldurchflussmessgerät (1) nach einem der Ansprüche 1 bis 9, **dadurch gekennzeichnet, dass** sämtliche Ultraschallwandler (4, 5, 17, 18) auf derselben Seite des Messrohrs (3) angeordnet sind.

11. Verfahren (2) zur Messung des Durchflusses eines durch ein Messrohr (3) strömenden Mediums mittels eines Ultraschalldurchflussmessgeräts (1), wobei das Ultraschalldurchflussmessgerät (1) wenigstens zwei Ultraschallwandler (4, 5) und wenigstens eine Steuer- und Auswerteeinheit (6) aufweist, wobei das Messrohr (3) eine Innenwand aufweist, wobei die Ultraschallwandler (4, 5) jeweils als Sender (4, 5) zur Aussendung eines Ultraschallsignals (7) und/oder als Empfänger (4, 5) für den Empfang des Ultraschallsignals (7) ausgestaltet sind, wobei die Ultraschallwandler (4, 5) in Strömungsrichtung gesehen versetzt derart an dem Messrohr (3) angeordnet sind, dass der jeweilige Sender (4, 5) im Betrieb ein Ultraschallsignal (7) in Strömungsrichtung oder entgegen der Strömungsrichtung aussendet und dass der Empfänger (4, 5) das von dem Sender ausgesendete Ultraschallsignal (7) nach wenigstens einer Reflexion an der Innenwand des Messrohrs (3) empfängt, wobei das Ultraschallsignal (7) einen ersten Signalanteil (8) und wenigstens einen zweiten Signalanteil (9) aufweist,
wobei die Ultraschallwandler (4, 5) derart aufeinander ausgerichtet sind, dass der erste Signalanteil (8) des Ultraschallsignals (7) über einen ersten Messpfad (11) von dem Sender (4, 5) zu dem Empfänger (4, 5) gelangt und dass der zweite Signalanteil (9) des Ultraschallsignals (7) über einen zweiten Messpfad (12) von dem Sender (4, 5) zu dem Empfänger (4, 5) gelangt, wobei der erste Messpfad (11) und der zweite Messpfad (12) eine unterschiedliche Anzahl an Reflexionen an der Innenwand des Messrohrs (3) aufweisen und wobei der erste Signalanteil (8) und der zweite Signalanteil (9) durch unterschiedliche Laufzeiten am Empfänger (4, 5) unterscheidbar sind und wobei die Steuer- und Auswerteeinheit (6) aus der Laufzeit des ersten Signalanteils (8) und aus der Laufzeit des zweiten Signalanteils (9) die Geschwindigkeit und den Durchfluss des Mediums bestimmt,
**dadurch gekennzeichnet,**
**dass** wenigstens ein weiterer Signalanteil (10), der über einen weiteren stabilen Messpfad (13) zu dem Empfänger (4, 5) gelangt, vorhanden ist und dass der wenigstens eine weitere Signalanteil (10) des Ultraschallsignals (7) durch ein Mittel (14, 15) zur Unterdrückung unterdrückt wird.

12. Verfahren (2)
nach Anspruch 11, **dadurch gekennzeichnet, dass** das Ultraschalldurchflussmessgerät (1) gemäß einem der Ansprüche 1 bis 10 ausgestaltet ist.

13. Verfahren (2) nach einem der Ansprüche 11 bis 12, **dadurch gekennzeichnet, dass** wenigstens ein dritter und ein vierter Ultraschallwandler (17, 18) vorhanden sind, die jeweils als Sender (17, 18) und/oder als Empfänger (17, 18) ausgestaltet sind, wobei der dritte und der vierte Ultraschallwandler (17, 18) in Strömungsrichtung versetzt derart an dem Messrohr (3) angeordnet sind, dass der Messpfad zwischen dem dritten und dem vierten Ultraschallwandler (17, 18) die Messrohrachse bei r = 0 R schneidet, wobei der als Sender ausgestaltete dritte oder vierte Ultraschallwandler (17, 18) ein Ultraschallsignal (7a) aussendet, das von dem als Empfänger ausgestalteten dritten oder vierten Ultraschallwandler (17, 18) empfangen wird und dass die Steuer- und Auswerteeinheit (6) die Laufzeit des Ultraschallsignals (7a) bei der Bestimmung der Geschwindigkeit des Mediums berücksichtigt.

## Claims

1. Ultrasonic flowmeter (1) for measuring the flow of a medium flowing through a measuring tube (3) with at least two ultrasonic transducers (4,5) and at least one control and evaluation unit (6), wherein the measuring tube (3) has an inner wall, wherein the ultrasonic transducers (4, 5) each are designed as transmitters (4,5) for transmitting an ultrasonic signal (7) and/or as receivers (4, 5) for receiving the ultrasonic signal, wherein the ultrasonic transducers (4, 5) are arranged offset in the direction of flow such that the respective transmitter (4, 5) transmits an ultrasonic signal (7) in the direction of flow or against the direction of flow during operation and that the receiver (4, 5) receives the ultrasonic signal (7) transmitted by the transmitter (4, 5) after at least one reflection on the inner wall of the measuring tube (3), wherein the ultrasonic signal (7) has a first signal component (8) and at least a second signal component (9),
wherein the ultrasonic transducers (4, 5) are aligned with one another such that the first signal component (8) of the ultrasonic signal (7) reaches the receiver (4, 5) via a first measuring path (11) from the transmitter (4, 5) to the receiver (4, 5), and that the second signal component (9) of the ultrasonic signal (7) reaches the receiver (4, 5) via a second measuring path (12) from the transmitter (4, 5) to the receiver (4,5), wherein the first measuring path (11) and the second measuring path (12) have a different number of reflections on the inner wall of the measuring tube (3) and wherein the first signal component (8) and the second signal component (9) can be distinguished by different transit times at the receiver (4, 5), and that the control and evaluation unit (6) is designed in such a manner that the control and evaluation unit (6) determines the speed and the flow rate of the medium using the transit time of the first signal component (8) and the transit time of the second signal component (9),
**characterized in**
**that** at least one further signal component (10), which reaches the receiver (4, 5) via a further stable measuring path (13), and at least one means (14, 15) for suppressing the at least one further signal component (10) of the ultrasonic signal (7) are present.

2. Ultrasonic flowmeter (1) according to claim 1, **characterized in that** the measuring tube (3) has an inner cross-section with a radius R and that the first and the second ultrasonic transducer (4, 5) are arranged and aligned such that the first measuring path (11) and the second measuring path (12), preferably exclusively, are arranged in the edge region of the inner cross section, preferably in a region at a radius r ≥ 0.5 R.

3. Ultrasonic flowmeter (1) according to any one of claims 1 or 2, **characterized in that** the ultrasonic transducers (4, 5) are aligned such that the first measuring path (11) has at least two reflections on the inner wall of the measuring tube (3) and that the second measuring path (12) has at least three, preferably at least four reflections on the inner wall.

4. Ultrasonic flowmeter (1) according to any one of claims 1 to 3, **characterized in that** the means (14, 15) for suppression is configured as at least one recess (14) of the inner wall of the measuring tube (3).

5. Ultrasonic flowmeter (1) according to claim 4, **characterized in that** the recess (14) is filled with a material that absorbs the ultrasonic signal.

6. Ultrasonic flowmeter (1) according to one of claims 4 or 5, **characterized in that** the recess (14) is filled alternatively or additionally with a material having a structural surface (15) for scattering the signal component (8, 9, 10) to be suppressed.

7. Ultrasonic flowmeter (1) according to one of claims 1 to 6, **characterized in that** the ultrasonic transducer (4, 5) designed as a transmitter is aligned such that the ultrasonic signal (7) is directed in the direction of the signal component (8, 9, 10), which reaches the ultrasonic transducer designed as receiver via the measuring path (11, 12, 13) with the highest number of reflections, so that preferably the acoustic energy of this signal component (8, 9, 10) is higher than the acoustic energy of the other signal component (8, 9, 10) or the other signal components (8, 9, 10).

8. Ultrasonic flowmeter (1) according to claim 7, **characterized in that** the ultrasonic transducer (4, 5) designed as transmitter is aligned such that at least the first signal component (8) and the second signal component (9) have substantially the same acoustic energy at the ultrasonic transducer (4, 5) designed as receiver.

9. Ultrasonic flowmeter (1) according to one of claims 1 to 8, **characterized in that** at least a third and a fourth ultrasonic transducer (17, 18) are present, each designed as a transmitter (17, 18) and/or as a receiver (17, 18), wherein the third and the fourth ultrasonic transducer (17, 18) are arranged on the measuring tube (3) offset in the flow direction such that the measuring path between the third and the fourth ultrasonic transducer (17, 18) intersects the measuring tube axis at r = 0 R.

10. Ultrasonic flowmeter (1) according to any one of claims 1 to 9, **characterized in that** all the ultrasonic transducers (4, 5, 17, 18) are arranged on the same side of the measuring tube (3).

11. Method (2) for measuring the flow rate of a medium flowing through a measuring tube (3) by means of an ultrasonic flowmeter (1), wherein the ultrasonic flowmeter (1) has at least two ultrasonic transducers (4, 5) and at least one control and evaluation unit (6), wherein the measuring tube (3) has an inner wall, wherein the ultrasonic transducers (4, 5) are each designed as a transmitter (4, 5) for transmitting an ultrasonic signal (7) and/or as a receiver (4, 5) for receiving the ultrasonic signal (7), wherein the ultrasonic transducers (4, 5) are arranged on the measuring tube (3) offset in the direction of flow such that the respective transmitter (4, 5) transmits an ultrasonic signal (7) in the flow direction or against the flow direction and in that the receiver (4, 5) receives the ultrasonic signal (7) transmitted by the transmitter after at least one reflection on the inner wall of the measuring tube (3), wherein the ultrasonic signal (7) has a first signal component (8) and at least a second signal component (9),
wherein the ultrasonic transducers (4, 5) are aligned to one another such that the first signal component (8) of the ultrasonic signal (7) reaches the receiver (4, 5) via a first measuring path (11) from the transmitter (4, 5) and that the second signal component (9) of the ultrasonic signal (7) reaches the receiver (4, 5) via a second measuring path (12) from the transmitter (4, 5), wherein the first measuring path (11) and the second measuring path (12) have a different number of reflections on the inner wall of the measuring tube (3) and wherein the first signal component (8) and the second signal component (9) are distinguishable by different transit times at the receiver (4, 5) and
wherein the control and evaluation unit (6) determines the speed and the flow rate of the medium using the transit time of the first signal component (8) and the transit time of the second signal component (9),
**characterized in**
**that** at least one further signal component (10), which reaches the receiver (4, 5) via a further stable measuring path (13), is present and that the at least one further signal component (10) of the ultrasonic signal (7) is suppressed by a means (14, 15) for suppression.

12. Method (2) according to claim 11, **characterized in that** the ultrasonic flowmeter (1) is designed according to any one of claims 1 to 10.

13. Method (2) according to any one of claims 11 to 12, **characterized in that** at least a third and a fourth ultrasonic transducer (17, 18) are present, each being designed as a transmitter (17, 18) and/or as a receiver (17, 18), wherein the third and the fourth ultrasonic transducer (17, 18) are arranged on the measuring tube (3) offset in the flow direction such that the measuring path between the third and the fourth ultrasonic transducer (17, 18) intersects the measuring tube axis at r = 0 R, wherein the third or fourth ultrasonic transducer (17, 18) designed as transmitter transmits an ultrasonic signal (7a) that is received by the third or fourth ultrasonic transducer (17, 18) designed as receiver and **in that** the control and evaluation unit (6) takes the transit time of the ultrasonic signal (7a) into account in determining the speed of the medium.

## Revendications

1. Débitmètre à ultrasons (1) destiné à mesurer le débit d'un fluide qui s'écoule à travers un tube de mesure (3), comprenant au moins deux transducteurs d'ultrasons (4, 5) et au moins une unité de commande et d'interprétation (6), le tube de mesure (3) possédant une paroi interne, les transducteurs d'ultrasons (4, 5) étant respectivement configurés en tant qu'émetteur (4, 5) pour l'émission d'un signal ultrasonore (7) et/ou en tant que récepteur (4, 5) pour la réception du signal ultrasonore (7), les transducteurs d'ultrasons (4, 5) étant disposés décalés au niveau du tube de mesure (3), vus dans la direction de l'écoulement, de telle sorte que l'émetteur (4, 5) respectif en fonctionnement émet un signal ultrasonore (7) dans la direction de l'écoulement ou à l'opposé de la direction de l'écoulement et que le récepteur (4, 5) reçoit le signal ultrasonore (7) émis par l'émetteur (4, 5) après au moins une réflexion sur la paroi interne du tube de mesure (3), le signal ultrasonore (7) possédant une première part de signal (8) et au moins une deuxième part de signal (9),
les transducteurs d'ultrasons (4, 5) étant orientés l'un sur l'autre de telle sorte que la première part de signal (8) du signal ultrasonore (7) parvient de l'émetteur (4, 5) au récepteur (4, 5) par le biais d'un premier trajet de mesure (11) et que la deuxième part de signal (9) du signal ultrasonore (7) parvient de l'émetteur (4, 5) au récepteur (4, 5) par le biais d'un deuxième trajet de mesure (12), le premier trajet de mesure (11) et le deuxième trajet de mesure (12) possédant un nombre différent de réflexions au niveau de la paroi interne du tube de mesure (3) et la première part de signal (8) et la deuxième part de signal (9) pouvant être différenciées par des temps de propagation différents au niveau du récepteur (4, 5) et l'unité de commande et d'interprétation (6) étant configurée de telle sorte que l'unité de commande et d'interprétation (6) détermine la vitesse et le débit du fluide à partir du temps de propagation de la première part de signal (8) et du temps de propagation de la deuxième part de signal (9),
**caractérisé en ce**
**qu'**il existe au moins une part de signal supplémentaire (10), laquelle parvient au récepteur (4, 5) par le biais d'un trajet de mesure stable (13) supplémentaire, et **en ce qu'**il existe au moins un moyen (14, 15) destiné à l'atténuation d'au moins une part de signal supplémentaire (10) du signal ultrasonore (7).

2. Débitmètre à ultrasons (1) selon la revendication 1, **caractérisé en ce que** le tube de mesure (3) possède une section transversale intérieure ayant un rayon R et **en ce que** les premier et deuxième transducteurs d'ultrasons (4, 5) sont disposés et orientés de telle sorte que le premier trajet de mesure (11) et le deuxième trajet de mesure (12) sont, de préférence exclusivement, disposés dans la zone de bordure de la section transversale intérieure, de préférence dans une zone avec un rayon r ≥ 0,5R.

3. Débitmètre à ultrasons (1) selon l'une des revendications 1 et 2, **caractérisé en ce que** les transducteurs d'ultrasons (4, 5) sont orientés de telle sorte que le premier trajet de mesure (11) possède au moins deux réflexions au niveau de la paroi interne du tube de mesure (3) et **en ce que** le deuxième trajet de mesure (12) possède au moins trois, de préférence quatre réflexions au niveau de la paroi interne.

4. Débitmètre à ultrasons (1) selon l'une des revendications 1 à 3, **caractérisé en ce que** le moyen (14, 15) destiné à l'atténuation est réalisé sous la forme d'au moins une cavité (14) de la paroi interne du tube de mesure (3).

5. Débitmètre à ultrasons selon la revendication 4, **caractérisé en ce que** la cavité (14) est remplie d'un matériau absorbant le signal ultrasonore.

6. Débitmètre à ultrasons selon l'une des revendications 4 et 5, **caractérisé en ce que** la cavité, en variante ou en complément, est remplie d'un matériau ayant une surface structurée (15) servant à la dispersion de la part de signal (8, 9, 10) à atténuer.

7. Débitmètre à ultrasons (1) selon l'une des revendications 1 à 6, **caractérisé en ce que** le transducteur d'ultrasons (4, 5) configuré en tant qu'émetteur est orienté de telle sorte que le signal ultrasonore (7) est dévié dans la direction de la part de signal (8, 9, 10) qui parvient au transducteur d'ultrasons configuré en tant que récepteur par le biais du trajet de mesure (11, 12, 13) ayant le plus grand nombre de réflexions, de sorte que l'énergie acoustique de cette part de signal (8, 9, 10) soit de préférence supérieure à l'énergie acoustique de l'autre part de signal (8, 9, 10) ou des autres parts de signal (8, 9, 10).

8. Débitmètre à ultrasons (1) selon la revendication 7, **caractérisé en ce que** le transducteur d'ultrasons (4, 5) configuré en tant qu'émetteur est orienté de telle sorte qu'au moins la première part de signal (8) et la deuxième part de signal (9) présentent sensiblement la même énergie acoustique au niveau du transducteur d'ultrasons (4, 5) configuré en tant que récepteur.

9. Débitmètre à ultrasons (1) selon l'une des revendications 1 à 8, **caractérisé en ce qu'**au moins un troisième et un quatrième transducteur d'ultrasons (17, 18) sont présents, lesquels sont respectivement configurés en tant qu'émetteur (17, 18) et/ou en tant que récepteur (17, 18), le troisième et le quatrième transducteur d'ultrasons (17, 18) étant disposés décalés dans la direction de l'écoulement au niveau du tube de mesure (3) de telle sorte que le trajet de mesure entre le troisième et le quatrième transducteur d'ultrasons (17, 18) croise l'axe du tube de mesure à r = 0 R.

10. Débitmètre à ultrasons (1) selon l'une des revendications 1 à 9, **caractérisé en ce que** tous les transducteurs d'ultrasons (4, 5, 17, 18) sont disposés sur le même côté du tube de mesure (3).

11. Procédé (2) de mesure du débit d'un fluide qui s'écoule à travers un tube de mesure (3) au moyen d'un débitmètre à ultrasons (1), le débitmètre à ultrasons (1) comprenant au moins deux transducteurs d'ultrasons (4, 5) et au moins une unité de commande et d'interprétation (6), le tube de mesure (3) possédant une paroi interne, les transducteurs d'ultrasons (4, 5) étant respectivement configurés en tant qu'émetteur (4, 5) pour l'émission d'un signal ultrasonore (7) et/ou en tant que récepteur (4, 5) pour la réception du signal ultrasonore (7), les transducteurs d'ultrasons (4, 5) étant disposés décalés au niveau du tube de mesure (3), vus dans la direction de l'écoulement, de telle sorte que l'émetteur (4, 5) respectif en fonctionnement émet un signal ultrasonore (7) dans la direction de l'écoulement ou à l'opposé de la direction de l'écoulement et que le récepteur (4, 5) reçoit le signal ultrasonore (7) émis par l'émetteur après au moins une réflexion sur la paroi interne du tube de mesure (3), le signal ultrasonore (7) possédant une première part de signal (8) et au moins une deuxième part de signal (9),
les transducteurs d'ultrasons (4, 5) étant orientés l'un sur l'autre de telle sorte que la première part de signal (8) du signal ultrasonore (7) parvient de l'émetteur (4, 5) au récepteur (4, 5) par le biais d'un premier trajet de mesure (11) et que la deuxième part de signal (9) du signal ultrasonore (7) parvient de l'émetteur (4, 5) au récepteur (4, 5) par le biais d'un deuxième trajet de mesure (12), le premier trajet de mesure (11) et le deuxième trajet de mesure (12) possédant un nombre différent de réflexions au niveau de la paroi interne du tube de mesure (3) et la première part de signal (8) et la deuxième part de signal (9) pouvant être différenciées par des temps de propagation différents au niveau du récepteur (4, 5) et l'unité de commande et d'interprétation (6) déterminant la vitesse et le débit du fluide à partir du temps de propagation de la première part de signal (8) et du temps de propagation de la deuxième part de signal (9), **caractérisé en ce**
**qu'**il existe au moins une part de signal supplémentaire (10), laquelle parvient au récepteur (4, 5) par le biais d'un trajet de mesure stable (13) supplémentaire, et **en ce que** l'au moins une part de signal supplémentaire (10) du signal ultrasonore (7) est atténuée par un moyen (14, 15) destiné à l'atténuation.

12. Procédé (2) selon la revendication 11, **caractérisé en ce que** le débitmètre à ultrasons (1) est configuré selon l'une des revendications 1 à 10.

13. Procédé (2) selon l'une des revendications 11 et 12, **caractérisé en ce qu'**au moins un troisième et un quatrième transducteur d'ultrasons (17, 18) sont présents, lesquels sont respectivement configurés en tant qu'émetteur (17, 18) et/ou en tant que récepteur (17, 18), le troisième et le quatrième transducteur d'ultrasons (17, 18) étant disposés décalés dans la direction de l'écoulement au niveau du tube de mesure (3) de telle sorte que le trajet de mesure entre le troisième et le quatrième transducteur d'ultrasons (17, 18) croise l'axe du tube de mesure à r = 0 R, le troisième ou le quatrième transducteur d'ultrasons (17, 18) configuré en tant qu'émetteur émettant un signal ultrasonore (7a) qui est reçu par le troisième ou le quatrième transducteur d'ultrasons (17, 18) configuré en tant que récepteur et **en ce que** l'unité de commande et d'interprétation (6) tient compte du temps de propagation du signal ultrasonore (7a) lors de la détermination de la vitesse du fluide.
